# EUROPÄISCHE PATENTSCHRIFT

(11) **EP 1 474 670 B1**
(45) Veröffentlichungstag und Bekanntmachung des Hinweises auf die Patenterteilung: **21.06.2006**
(21) Anmeldenummer: 03706469.8
(22) Anmeldetag: 10.02.2003
(51) Int. Cl.: G01L 1/24

(54) **DRUCKSENSOR MIT EINEM LICHTWELLENLEITER UND VERFAHREN ZUR DRUCKERFASSUNG**
PRESSURE SENSOR COMPRISING AN OPTICAL WAVEGUIDE, AND METHOD FOR DETECTING PRESSURE
CAPTEUR DE PRESSION MUNI D'UN GUIDE D'ONDES OPTIQUES ET PROCEDE DE DETECTION DE PRESSION

(30) Priorität: 11.02.2002 DE 10205594
(43) Veröffentlichungstag der Anmeldung: 10.11.2004
(73) Patentinhaber: LEONI Bordnetz-Systeme GmbH & Co KG, 90402 Nürnberg (DE)
(72) Erfinder: REICHINGER, Gerhard, 91126 Rednitzhembach (DE); KODL, Georg, 90403 Nürnberg (DE)
(74) Vertreter: Tergau & Pohl Patentanwälte
(86) Internationale Anmeldenummer: PCT/EP2003/001300
(87) Internationale Veröffentlichungsnummer: WO 2003/069294

(56) Entgegenhaltungen:
- EP-A- 0 327 964
- DE-A- 3 443 949
- DE-A- 3 802 527
- GB-A- 2 141 821
- US-A- 3 051 003
- US-A- 4 735 212
- US-A- 4 915 473
- PATENT ABSTRACTS OF JAPAN vol. 008, no. 253 (M-339), 20. November 1984 (1984-11-20) & JP 59 128009 A (NIPPON DENSO KK), 24. Juli 1984 (1984-07-24)
- PATENT ABSTRACTS OF JAPAN vol. 018, no. 370 (P-1768), 12. Juli 1994 (1994-07-12) & JP 06 102114 A (YASKAWA ELECTRIC CORP), 15. April 1994 (1994-04-15)

## Beschreibung

Die Erfindung betrifft einen Drucksensor mit einem Lichtwellenleiter, der eine optische Faser mit einem Brechungsindex n1 aufweist.

Derartige Drucksensoren sind beispielsweise aus der DE 197 21 341 C2, der DE 42 36 742 A1 sowie der DE 36 03 934 A1 zu entnehmen. Bel den bekannten Drucksensoren wird in den Lichtwellenleiter Licht eingespeist und die Dämpfung des Lichts als Maß für eine Druckbelastung des Lichtwellenleiters herangezogen. Dabei wird die Eigenschaft des Lichtwellenleiters ausgenutzt, dass bei einer mechanischen Belastung der Lichtwellenleker eine Krümmung oder Biegung erfährt, so dass sich seine optische Eigenschaft und damit sein Dämpfungsverhalten verändert. Insbesondere wird dabei der Effekt ausgenutzt, dass bei einer kritischen Durchbiegung des Lichtwellenleiters die physikalische Randbedingung für eine Totalreflexion des Lichts innerhalb des Lichtwellenleiters nicht mehr vorliegt. In diesem Fall wird ein Großteil des Lichts aus der Faser ausgekoppelt. Dies führt zu der Dämpfung, die von einem geeigneten Sensor detektiert wird und als Maß für die Druckbeanspruchung herangezogen wird. Nachteilig hierbei ist, dass der Drucksensor nur eine geringe Empfindlichkeit aufweist, da der Drucksensor erst bei einer vorbestimmten Durchbiegung des Lichtwellenleiters anspricht.

Derartige Drucksensoren, bei denen bei Druckbeaufschlagung der Lichtwellenleiter veformt wird, sind weiterhin aus der US 4.915.473, JP 59128009 sowie der DE 34 33 949 A 1zu entnehmen.

Aus der US 4,735,212 ist ein medizinischer Katheder mit einem innenliegenden Lichtwellenlieter zu entnehmen. Zur Erfassung eines Druckes sind an vorbestimmten Stellen am Katheder in dessen Mantel insbesondere geschäumte Teilstücke eingearbeitet, welche zur Druckübertragung auf den nur in diesen Teilbereichen claddingfreien Lichtwellenleiter vorgesehen sind.

Der Erfindung liegt die Aufgabe zugrunde, einen zuverlässigen Drucksensor sowie ein zuverlässiges Verfahren zur Druckerfassung anzugeben.

Die Aufgabe wird gemäß der Erfindung gelöst durch einen Drucksensor mit einem Lichtwellenleiter, der eine optische Faser mit einem Brechungsindex n1 aufweist, die unter Bildung eines Zwischenraums in einem eine Faserführung bildenden schlauchartigen Mantel einliegt. Im Zwischenraum befindet sich ein die optische Faser umgebendes Medium mit einem Brechungsindex n2. Die Faserführung ist derart ausgebildet, dass sie bei einer Druckbeaufschlagung zum Anliegen an die optische Faser kommt, wodurch die Lichtausbreitung durch die optischen Faser gedämpft ist. Der Mantel stützt sich an Stützstellen an der Faser unter Freilassung des Zwischenraums ab. Die Stützstellen gewährleisten dabei im unbelasteten Zustand die Aufrechterhaltung des Zwischenraums. Zudem ist durch diese Maßnahme der Drucksensor als solcher fertigungstechnisch vergleichsweise einfach herzustellen. Insbesondere lassen sich die Randbedingungen bezüglich der Brechungsindizes und des Abstands zwischen der Faser und dem Mantel sicher und zuverlässig einstellen. Im Folgenden wird der Mantel auch als Faserführung bezeichnet.

Dieser Ausgestaltung liegt die Überlegung zugrunde, dass die physikalische Voraussetzung für die Totalreflexion im Lichtwellenleiter dann erfüllt ist, wenn das die optische Faser umgebende Material oder Medium einen kleineren Brechungsindex aufweist als die Faser. Weiterhin beruht die Ausgestaltung des Drucksensors auf der Erkenntnis, dass die für die Lichtausbreitung notwendige Reflexion nicht exakt an der Grenzfläche zwischen der optischen Faser und dem die Faser umgebenden Medium auftritt, sondern dass vielmehr die Lichtwellen geringfügig in den sich unmittelbar an die optische Faser angrenzenden Außenraum eindringen, und dass sich hier das sogenannte Evanescent-Feld ausbildet. Als optische Faser wird jegliches zur Ausbreitung von Licht geeignetes Medium verstanden. Die Querschnittsgeometrie ist nicht auf rund festgelegt.

Ausgehend von diesen Überlegungen ist der Drucksensor nunmehr derart ausgebildet, dass bei einer Druckeinwirkung die Faserführung in den Außenbereich mit dem Evanescent-Feld gelangt, so dass das Evanescent-Feld und damit die Lichtausbreitung in der Faser geschwächt wird und diese Schwächung als Indiz für die Druckbeaufschlagung von einem geeigneten Sensor, insbesondere eine Fotodiode erfasst und in einer zugehörigen Auswerteeinrichtung ausgewertet wird.

Der entscheidende Vorteil gegenüber den herkömmlichen Drucksensoren mit Lichtwellenleitern ist darin zu sehen, dass eine Durchbiegung des Lichtwellenleiters, also insbesondere eine Durchbiegung der optischen Faser, nicht erfolgen muss. Es ist für die Funktionsfähigkeit des Drucksensors ausreichend, wenn die Faserführung an der optischen Faser zum Anliegen kommt. Auf eine Verformung der optischen Faser kommt es nicht an. Der Drucksensor ist also auch ohne Verformung der optischen Faser funktionsfähig. Dadurch ist ein verbessertes Ansprechverhalten des Drucksensors gegeben, der bereits vergleichsweise geringe Druckbelastungen erfassen kann. Zudem ist mit einem derartigen Drucksensor auch ein deutlich schnelleres Ansprechverhalten gegeben, da der Drucksensor bereits reagiert, wenn die Faserführung an der optischen Faser zum Anliegen kommt und nicht erst dann, wenn die optische Faser selbst eine Durchbiegung erfährt. Dies ist insbesondere in sicherheitstechnischen Bereichen von Vorteil, beispielsweise für einen Einklemmschutz bei einem Fenster eines Kraftfahrzeugs.

Vorzugsweise hat die Faserführung einen Brechungsindex größer als die optische Faser, so dass die Bedingung für die Totalreflexion nicht mehr gegeben ist, wenn die Faserführung an der Faser anliegt. Dadurch wird das sich In der Lichtwellenfaser ausbreitende Licht quasi ausgekoppelt und erfährt eine Dämpfung.

Gemäß einer zweckdienlichen Weiterbildung ist für einen möglichst einfachen Aufbau das Medium im Zwischenraum ein Gas und insbesondere Luft.

Vorzugsweise ist die Faser von der Faserführung im unbelasteten Fall ohne Druckeinwirkung - zumindest in weiten Teilbereichen - um etwa 5 bis 20µm beabstandet. Dieser Abstand entspricht der typischen Eindringtiefe des Evanescent-Felde in den die optische Faser umgebenden Außenraum. Bei einer geringeren Eindringtiefe kann der Abstand auch kleiner bis hin zu 1µm sein. Mit einer derartigen Dimensionierung ist also die Totalreflexion im unbelasteten Zustand sicher gewährleistet und gleichzeitig ist ein möglichst schnelles Ansprechverhalten sichergestellt. Zudem ist dadurch auch ein vergleichsweise kompakter Aufbau erzielt.

Vorzugsweise ist der Drucksensor weitgehend über die gesamte Länge der Faser drucksensitiv ausgebildet.

Bevorzugt weist dabei der Mantel eine rechteckförmige Querschnittsfläche auf. Der Mantel stützt sich in diesem Fall mit seinen Flachseiten an der im Querschnitt gesehen runden optischen Faser nur an lokal begrenzten Stellen ab. Zwar ist an diesen lokalen Stellen die Bedingung für die Totalreflexion nicht mehr gegeben, jedoch ist die Kontaktfläche ausreichend klein bemessen, so dass die dadurch bedingte Dämpfung die Wirkungsweise des Drucksensors nicht beeinträchtigt. Insbesondere kann durch geeignete Einstellmaßnahmen, beispielsweise durch Kalibriermaßnahmen, die hierdurch bedingte Dämpfung in der Auswerteeinrichtung berücksichtigt werden. Der Zwischenraum ist in diesem Fall gebildet in den Eckbereichen zwischen der kreisrunden Faser und dem rechteckigen Mantel.

Vorteilhafterweise umgibt altemativ hierzu der Mantel die Faser konzentrisch und weist zur Faser Abstandshalter auf, welche die Funktion der Stützstellen übernehmen. Diese Abstandshalter sind beispielsweise innerhalb des schlauchartigen Mantels geführte Längsrippen. Um die Auflagefläche des Mantels über die Abstandshalter an der Faser möglichst gering zu halten, verjüngen sich diese vorzugsweise zur Faser hin. Insbesondere sind sie im Querschnitt gesehen nach Art eines Dreiecks ausgebildet. Dadurch ist die durch die Abstandshalter bedingte Dämpfung gering gehalten. Allgemein ist bei der Anordnung des Mantels von Vorteil, wenn der Mantel im unbelasteten Zustand nur eine möglichst geringe Kontaktfläche mit der optischen Faser aufweist, und sich der Mantel möglichst nur punkt- oder linienförmig, also lokal begrenzt, an der Faser abstützt. In einer bevorzugten Weiterbildung ist vorgesehen, dass die Abstandshalter aus einem zum Mantel verschiedenen Material ausgebildet sind, wobei dieses Material einen Brechungsindex aufweist, welcher die Bedingung für die Totalreflexion erfüllt, so dass an den Abstandshaltern keine oder nur eine sehr geringe Dämpfung erfolgt.

Alternativ zu der Ausbildung mit dem die Faser umgebenden Mantel weist die Faserführung bevorzugt eine Oberflächenrauhigkeit auf und liegt auch im unbelasteten Fall ohne Druckeinwirkung bereits in Teilbereichen an der Faser an, wobei der Zwischenraum durch die Oberflächenrauhigkeit gewährleistet ist. Dieser Ausgestaltung liegt die Überlegung zugrunde, dass bei einer geeigneten Oberflächenrauhigkeit, deren Rauhigkeitstiefe im Bereich der Eindringtiefe des Evanescent-Felds liegen sollte, die Funktionsfähigkeit des Drucksensors ebenfalls gewährleistet ist. Diese Ausgestaltung ermöglicht einen besonders kostengünstigen und einfachen Aufbau des Drucksensors.

In einer bevorzugten Weiterbildung ist vorgesehen, dass der Lichtwellenleiter endseitig in einen Anschlussbereich zwischen der Faser und der Faserführung ein Zwischenelement aufweist, welches ein Anpressen der Faserführung gegen die Faser verhindert. Dieser Anschlussbereich ist beispielsweise ein Kopplungsbereich zwischen zwei Lichtwellenleitern oder auch der Bereich, in dem das Licht in den Lichtwellenleiter eingekoppelt bzw. ausgekoppelt wird. In diesem Anschlussbereich wird also der Lichtwellenleiter an ein weiteres optisches Element angekoppelt Aufgrund der notwendigerweise elastisch ausgebildeten Faserführung bestünde in diesem Anschlussbereich die Gefahr, dass die Faserführung gegen die optische Faser gepresst wird und dadurch im Anschlussbereich eine hohe Dämpfung vorliegen würde. Dies wird durch das Zwischenelement verhindert.

Das Zwischenelement weist vorzugsweise eine reflektierende Schicht auf und ist beispielsweise eine Metallfolie oder eine beschichtete Kunststofffolie. Auch kann das Zwischenelement durch Aufbringen einer reflektierenden Schicht auf die Faserführung ausgebildet werden.

Das Zwischenelement umgibt die Faser insbesondere vollständig und weist einen Brechungsindex auf, der kleiner als der Brechungsindex der optischen Faser ist, so dass die Bedingung für die Totalreflexion erfüllt ist.

Zur ortsaufgelösten Erfassung einer Druckbeaufschlagung sind in einer zweckdienlichen Weiterbildung mehrere Fasern vorgesehen, wobei die jeweilige Lichtausbreitung in den Fasern unabhängig voneinander erfasst und ausgewertet werden kann. Bevorzugt sind die Fasern nach Art eines Gitters oder Matrix verlegt und kreuzen sich, so dass eine nahezu punktgenaue Auflösung möglich ist. Bei der Verwendung von mehreren unabhängigen Fasern ist sowohl eine 2-dimensionale als auch eine 3-dimensionale ortsaufgelöste Erfassung möglich.

Für den Fall, dass die Drucksensitivität nicht über die gesamte Länge der Faser gewünscht ist, ist in einer vorteilhaften Weiterbildung ein Deaktivierungselement vorgesehen, das in einem Teilbereich die Drucksensitivität bei Druckbeaufschlagung unterbindet. Das Deaktivierungselement ist beispielsweise ein über die Faser nach Art eines Mantels geschobenes Röhrchen. Wird an Stelle des erfindungsgemäßen schlauchartigen Mantels eine flächige Faserführung verwendet, beispielsweise eine Schaumstoffplatte, so kann ein flächiges Deaktivierungselement, wie beispielsweise eine Metallfolie oder eine beschichtete Kunststofffolie verwendet werden. Das Deaktivierungselement ist derart ausgebildet, dass eine Dämpfung bei Druckbeaufschlagung möglichst unterbunden wird und eine Totalreflexion gewährleistet wird.

Zweckdienlicherweise ist der Drucksensor als ein Schaltelement ausgebildet und weist hierzu ein Druckelement auf. Das Druckelement kann als Führungselement ausgebildet sein oder bei Betätigung das Führungselement gegen die Faser drücken. Bei der Ausbildung als Schaltelement ist es ausreichend, wenn die Drucksensitivität lediglich in einem kleinen Teilbereich der Faser, auf den das Druckelement einwirkt, vorliegt. Bei Betätigung des Druckelements wird also die Lichtausbreitung in der Faser gestört. Diese Störung wird von der Auswerteeinheit als "Schalten" erfasst, wodurch eine weitere Funktion angesteuert werden kann, beispielsweise das An- oder Ausschalten eines elektrischen Verbrauchers.

Zur optischen Überprüfung des Schaltvorgangs wird vorzugsweise bei der Betätigung des Druckelements ein Teil des Lichts aus der Faser ausgekoppelt und sichtbar gemacht. Insbesondere wird das Druckelement selbst gegen die Faser gepresst und besteht aus einem transparenten Material, so dass das Druckelement selbst leuchtet.

Der Drucksensor wird bevorzugt in einem Kraftfahrzeug eingesetzt. Generell ist der Drucksensor geeignet für den Einsatz bei Einklemmschutzvorrichtungen im Kfz-Bereich, im Maschinenbau, bei Aufzügen, zur Erfassung von Druckbeanspruchungen durch Personen, Fahrzeugen oder sonstigen Druckwellen. Der Drucksensor kann beispielsweise in Autositzen integriert sein, als Erkennungssystem, ob der Autositz von einer Person belegt ist oder nicht. Weiterhin kann der Drucksensor insbesondere auch im Bereich der Stoßstange eines Kraftfahrzeugs integriert sein, um einen Aufprall frühzeitig und schnell zu erkennen und daraufhin geeignete Maßnahmen zu veranlassen. Da mit dem Drucksensor bereits vergleichsweise geringe Druckbelastungen erfassbar sind, kann dieser zur Gefahrminimierung bei Personenunfällen verwendet werden. Hierzu ist beispielsweise vorgesehen, dass bei der Detektion eines Aufpralls mittels des Drucksensors die Motorhaube des Kraftfahrzeugs unverzüglich angehoben wird, um eine nachgiebige und energieverzehrende Aufprallfläche zu bilden.

Für eine raumsparende Anordnung ist der Drucksensor dabei zweckdienlicherweise innerhalb eines Dichtungselements, beispielsweise in einer Fensterdichtung, als Teil einer Einklemmschutzvorrichtung integriert.

Die Aufgabe wird weiterhin gelöst durch das Verfahren nach Anspruch 19. Die im Hinblick auf den Drucksensor angeführten Vorteile und bevorzugten Ausgestaltungen gelten sinngemäß auch für das Verfahren.

Ausführungsbeispiele der Erfindung werden im Folgenden anhand der Figuren näher erläutert. Die in den Figuren dargestellten und beschriebenen plattenförmige Faserführungen sind nicht von den unabhänigen Patentansprüchen umfasst. Es zeigen jeweils in schematischen und stark vereinfachten Darstellungen:
- Fig. 1A,B: einen Querschnitt durch einen Lichtwellenleiter, bei dem eine optische Faser zwischen zwei plattenförmigen Elementen angeordnet ist, im Zustand ohne Druckeinwirkung und mit Druckeinwirkung,
- Fig. 2A,B: einen Längsschnitt durch einen Lichtwellenleiter, bei dem die optische Faser unmittelbar von einer Faserführung mit hoher Oberflächenrauhigkeit umgeben ist, im Zustand ohne und mit Druckeinwirkung,
- Fig. 3: einen Lichtwellenleiter im Querschnitt mit einem die optische Faser konzentrisch umgebenden Mantel,
- Fig. 4: einen Lichtwellenleiter im Querschnitt mit einem die optische Faser umgebenden quadratischen Mantel,
- Fig. 5: einen Lichtwellenleiter mit einer die optische Faser konzentrisch umgebenden Faserführung mit hoher Oberflächenrauhigkeit,
- Fig. 6: einen Längsschnitt durch den Lichtwellenleiter in einem Anschlussbereich,
- Fig. 7: eine Seitenansicht einer Kraftfahrzeugtür mit einer Einkiemmschutzvorrichtung, und
- Fig. 8: eine Querschnittsdarstellung entlang der Blickrichtung VII-VII in Fig. 7 durch den Türrahmen der Kraftfahrzeugtür,
- Fig. 9: eine Querschnittsdarstellung einer Ausbildung des Drucksensors als Schaltelement,
- Fig.10: eine Ausgestaltung des Drucksensors mit zwei Faserschleifen und Deaktivierungselementen,
- Fig. 10A: Eine perspektivische Aufsicht auf einen flächigen Drucksensor mit einer Faserschleife
- Fig. 11: einen Querschnitt durch einen einfach aufgebauten Drucksensor mit Deaktivierungselementen
- Fig. 12: eine Ausgestaltung des Drucksensors mit mehreren nach Art eines Gitters angeordneten Fasern, und
- Fig. 13: einen Drucksensor mit einem endseitig an der optischen Faser angeordneter Reflektor

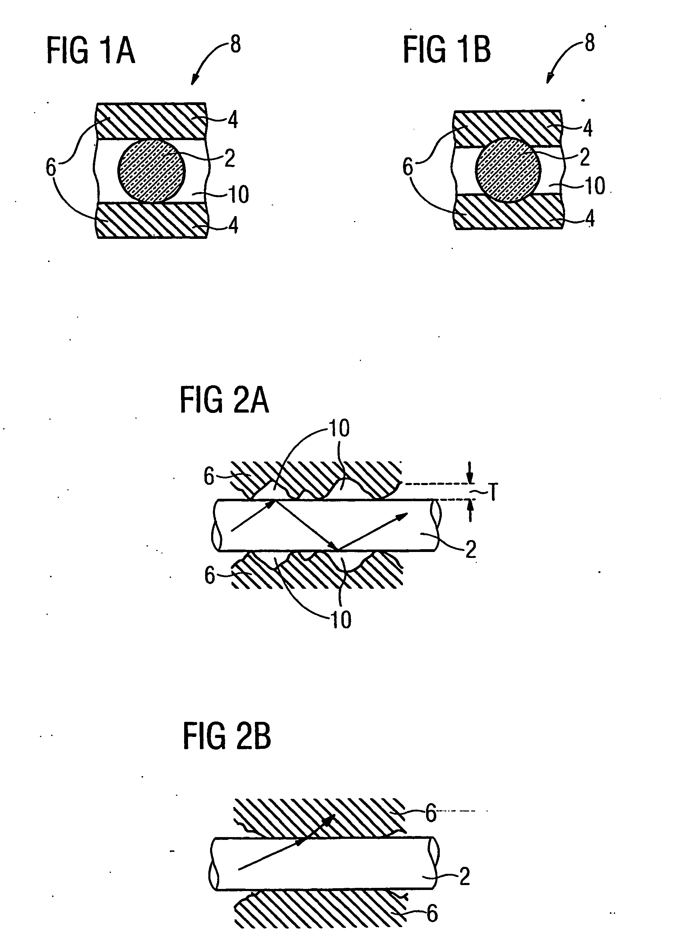

Nach den Figuren 1A und 1B ist eine optische Faser 2 zwischen zwei plattenförmigen Elementen 4, die eine elastische Faserführung 6 bilden, geführt. Die Faserführung 6 und die optische Faser 2 bildet insgesamt den Lichtwellenleiter 8. In dem In Fig. 1A dargestellten unbelasteten Zustand ohne Druckeinwirkung liegen die plattenförmigen Elemente 4 im Wesentlichen lediglich linienförmig an der optischen Faser 2 an, so dass die optische Faser 2 von einem als Zwischenraum 10 wirkenden Außenraum umgeben ist, in dem ein gasförmiges Medium, vorzugsweise Luft vorhanden ist. Im Unterschied zu herkömmlichen Lichtwellenleitern ist die optische Faser 2 daher nicht unmittelbar von einem Mantel, dem so genannten cladding, umfasst.

Die optische Faser 2 ist beispielsweise eine Glasfaser oder auch eine Kunststofffaser aus PMMA oder PU. Die plattenförmigen Elemente 4 sind beispielsweise Dichtungselemente und aus einem Gummi oder einem geeigneten Kunststoff. Die Faser 2 weist einen Brechungsindex n1 auf, welcher geringfügig größer ist als der Brechungsindex n2 der Luft im Zwischenraum 10. Zugleich ist der Brechungsindex n3 der Faserführung 6, also der plattenförmigen Elemente 4, größer als der Brechungsindex n1 der Faser 2. Die Beziehung n3 > n1 ist dabei nicht zwingend. Es ist ausreichend, wenn die Faserführung 6 aus einem die elektromagnetischen Wellen dämpfenden Material besteht.

Beim Betrieb des Drucksensors wird in den Lichtwellenleiter 8 an einer Seite Licht eingekoppelt. Hierzu wird eine geeignete Lichtquelle, vorzugsweise eine Leucht- oder Laserdiode verwendet. Endseitig am Lichtwellenleiter 8 ist ein geeigneter Lichtsensor, insbesondere eine Fotodiode angeordnet, welche mit einer Auswerteeinheit verbunden ist. Im Lichtsensor wird das durch den Lichtwellenleiter geleitete Licht erfasst und im Vergleich mit dem eingespeisten Licht wird in der Auswerteeinheit die Dämpfung errechnet. Im unbelasteten Zustand wie er in Fig. 1A dargestellt ist, ist an der Grenzfläche zwischen der optischen Faser und dem Zwischenraum 10 die Bedingung für die Totalreflexion gegeben, so dass das Licht im Wesentlichen verlustfrei durch den Lichtwellenleiter 8 geleitet wird. Lediglich im Bereich der linlenförmigen Kontaktfläche zu der Faserführung 6 tritt eine Dämpfung auf. Diese ist jedoch vergleichsweise gering.

Im belasteten Zustand unter Druckeinwirkung, wie er in Fig. 1B dargestellt ist, wird die Faserführung 6 gegen die Faser 2 gepresst und schmiegt sich aufgrund ihrer elastischen Ausbildung an die Faser 2 an, so dass ein vergleichsweise großflächiger Kontakt mit dieser ausgebildet wird. Dadurch ist im Bereich der Kontaktfläche zwischen der Faser und der Faserführung 6 die Bedingungen für die Totalreflexion nicht mehr erfüllt und das Licht bzw. Evanescent-Feld wird im Bereich dieser Kontaktfläche ausgekoppelt oder gedämpft. Dies führt zu einer zusätzlichen Dämpfung, die von der Auswerteeinheit erfasst wird. Wesentlich ist, dass für die Funktionsfähigkeit dieses Prinzips eine mechanische Belastung der optischen Faser und insbesondere ein Durchbiegen der optischen Faser 2 nicht erforderlich ist. Dadurch ist ein sehr schnelles und sensibles Ansprechverhalten des Drucksensors gegeben.

Das Funktionsprinzip des Drucksensors ist nochmals anhand der Figuren 2A und 2B dargestellt, bei denen die Faser 2 unmittelbar von einer Faserführung 6 umgeben ist, die lediglich eine hohe Oberflächenrauhigkeit mit einer Rauhigkeitstiefe T aufweist Die Rauhigkeitstiefe T gibt dabei insbesondere die mittlere Rauhigkeitstiefe der Oberflächenrauhigkeit an. Durch die Oberflächenrauhigkeit sind zwischen der Faser 2 und der Faserführung 6 einzelne Hohlräume gebildet, die die Funktion des Zwischenraums 10 erfüllen. Im unbelasteten Zustand gemäß Fig. 2A ist daher in weiten Bereichen die Bedingung für die Totalreflexion erfüllt, wie schematisch durch den durch Pfeile angedeuteten Strahlengang des Lichts dargestellt ist. Hierbei wurde der Einfachheit halber auf die Darstellung des Evanescent-Feldes verzichtet, d.h. das Eindringen der Lichtwelle in den Zwischenraum 10 ist nichtdargestellt. Die Rauhigkeitstiefe T entspricht dabei in etwa der Eindringtiefe des Evanescent-Feldes, welche typischerweise in der Größenordnung zwischen 5 und 20µm liegt. Bei einer Druckbelastung wird die Faserführung 6 gegen die Faser 2 gepresst, so dass wiederum die Bedingung für die Totalreflexion unterbrochen ist und das Licht aus der Faser 2 ausgekoppelt wird, was zur Dämpfung führt.

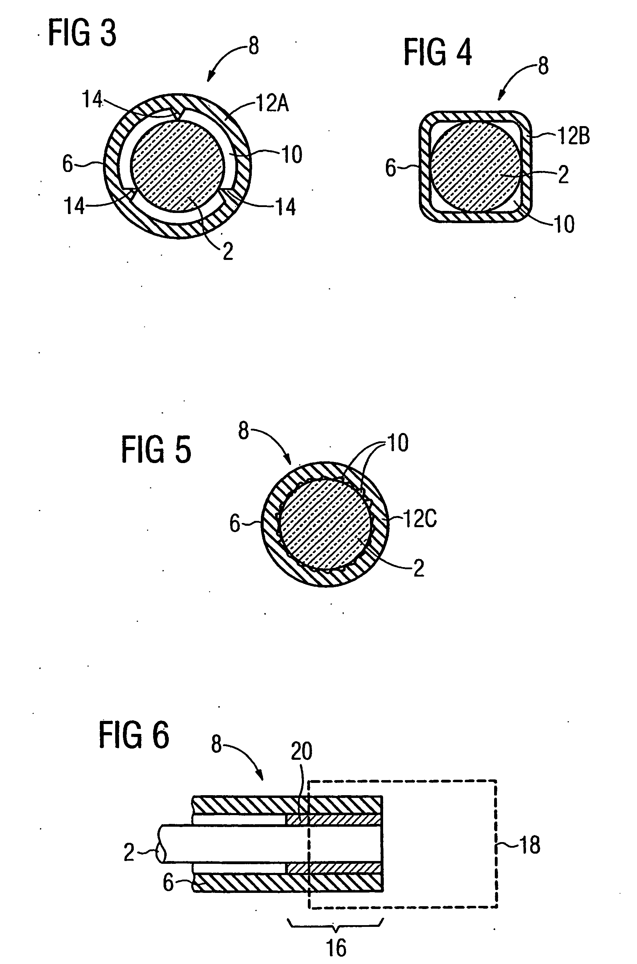

Gemäß Fig. 3 ist die Faser 2 von einem konzentrischen Mantel 12A unter Freilassung des Zwischenraums 10 umhüllt. Der Mantel 12A stützt sich an drei Abstandshaltern 14 ab, die etwa jeweils um 120° drehversetzt angeordnet sind. Der Mantel 12A ist von der Faser 2 zumindest in der Größenordnung der Eindringtiefe des Evanescent-Feldes, also zumindest 5 bis 20 µm beabstandet. Die Abstandshalter 14 weisen im Querschnitt gesehen eine dreieckförmige Grundfläche auf, deren Spitze zur Faser 2 gerichtet ist. Die Abstandshalter 14 erstrecken sich in Längsrichtung des Mantels 12A nach Art von Längsrippen auf dessen Innenoberseite. In Fig. 3 ist dabei schematisch dargestellt, dass die Abstandshalter 14 aus einem vom Mantel 12A verschiedenen Material ausgebildet sind. Der Brechungsindex der Abstandshalter 14 ist dabei geringer als der der Faser 2. Alternativ hierzu können die Abstandshalter 14 auch aus dem gleichen Material wie der Mantel 12A sein und beispielsweise bei einem Extrusionsvorgang hergestellt werden.

Der Lichtwellenleiter nach Fig. 4 umfasst einen im Querschnitt gesehen quadratischen Mantel 12B, welcher im unbelasteten Zustand an vier Stellen linienförmig an der optischen Faser 2 anliegt. Der Mantel 12B kann auch eine rechteckförmige Querschnittsfläche haben, so dass er im unbelasteten Zustand lediglich an zwei Kontaktlinien anliegt.

Gemäß Fig. 5 ist die Faser 2 von einem konzentrischen Mantel 12C umgeben, welcher eine hohe Oberflächenrauhigkeit aufweist.

Die Ausführungsvarianten gemäß den Figuren 3 bis 5 haben gemeinsam, dass der Mantel 12A,B,C die Faserführung 6 bildet, und einen Brechungsindex n3 welcher größer als der Brechungsindex n1 der Faser 2 ist, oder eine optische Dämpfung aufweist. Weiterhin ist der Mantel 12A,B,C wie auch die Faserführung 6 allgemein aus einem elastischen Material, so dass der Mantel 12A,B,C bei einer Druckbelastung gegen die Faser 2 gepresst wird und sich an dieser anschmiegt.

Gemäß Fig. 6 ist im Endbereich des Lichtwellenlleiters 8 ein Anschlussbereich 16 vorgesehen, in dem der Lichtwellenleiter 8 an ein weiteres optisches Element 18 angeschlossen ist. Dieses ist in Fig. 6 gestrichelt dargestellt und ist beispielsweise eine Leucht- oder auch eine Fotodiode. Das optische Element 18 kann auch ein Kupplungsstück zu einem herkömmlichen, nicht als Drucksensor ausgebildeten Lichtwellenleiter sein. Dieses optische Element 18 ist in der Regel nach Art eines Steckers am Lichtwellenleiter 8 befestigt. Hierbei wird für eine sichere Befestigung der Lichtwellenleiter 8 üblicherweise im Element 18 geklemmt. Um ein Anpressen der Faserführung 6 gegen die optische Faser 2 im Anschlussbereich 16 zu vermeiden, ist im Ausführungsbeispiel der Fig. 6 die Faser 2 von einem Zwischenelement 20 umschlossen. Dieses Zwischenelement 20 weist einen Brechungsindex n4 auf, welcher kleiner ist als der Brechungsindex n1 der Faser 2, so dass auch in diesem Bereich die Totalreflexion gewährleistet und eine Dämpfung möglichst vermieden ist. Das Zwischenelement 20 ist beispielsweise eine Teflonhülse. Es kann auch aus Metall oder einem metallisierten Kunststoff sein.

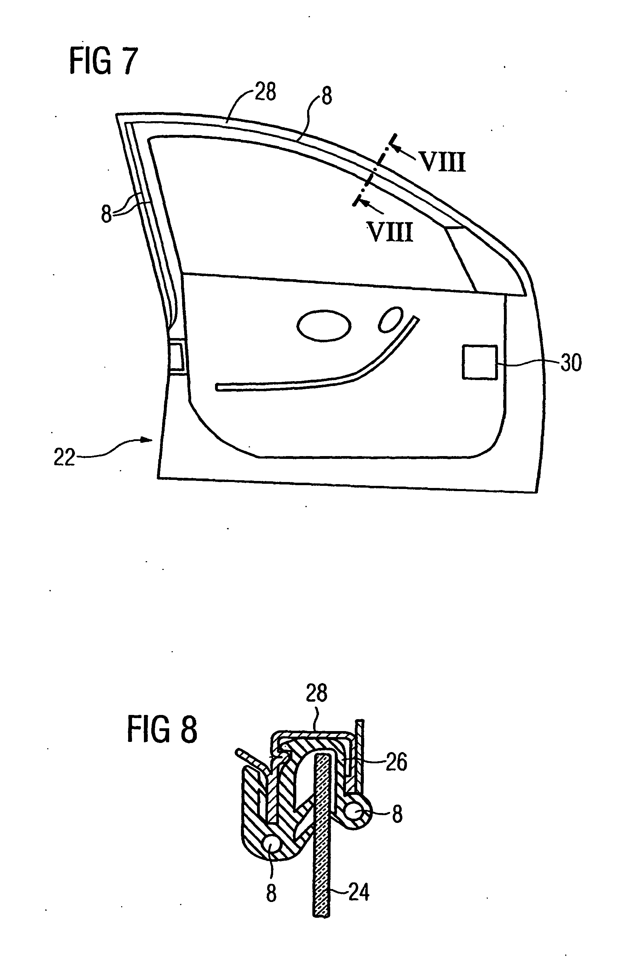

In Fig. 7 ist als bevorzugtes Einsatzgebiet der Einsatz des Drucksensors für eine Einklemmschutzvorrichtung bei einer Kraftfahrzeugtür 22 vorgesehen. Wie insbesondere auch in Verbindung mit Fig. 8 zu entnehmen ist, wird der als Drucksensor ausgebildete Lichtwellenleiter 8 beidseitig einer Fensterscheibe 24 geführt, und zwar ist der Lichtwellenleiter 8 in einem Dichtungselement 26 integriert, welches zur Abdichtung der Fensterscheibe 24 innerhalb des Türrahmens 28 dient. Im Ausführungsbeispiel ist dabei vorgesehen, dass der Lichtwellenleiter 8 von einer Steuereinheit 30 nach Art einer Schleife in dem Dichtungselement 26 zunächst weg- und dann wieder zurückgeführt wird. In der Steuereinheit 30 können hierbei die Lichtquelle, der Lichtsensor sowie eine Auswerteeinheit zur Bestimmung des Dämpfungsgrades integriert sein. Sobald zwischen der Fensterscheibe 24 und dem Dichtungselement 26 bzw. dem Fahrzeugrahmen 28 beim Hochfahren der Fensterscheibe 24 ein Gegenstand eingeklemmt wird, erfolgt eine Dämpfung des durch den Lichtwellenleiter 8 geleiteten Lichts und der Schließvorgang des Fensters wird gestoppt, um mögliche Verletzungen zu verhindern.

Der Drucksensor kann auch in einer nach oben offenen und beispielsweise V förmigen Aufnahme in der Stirnseite einer Festerscheibe einliegen. Der Drucksensor ist von außen zugänglich, so dass beispielsweise bei manuellem Druck mit der Hand das Hochfahren der Festerscheibe gestoppt wird. Der Drucksensor wirkt daher nach Art eines "Tauchsensors".

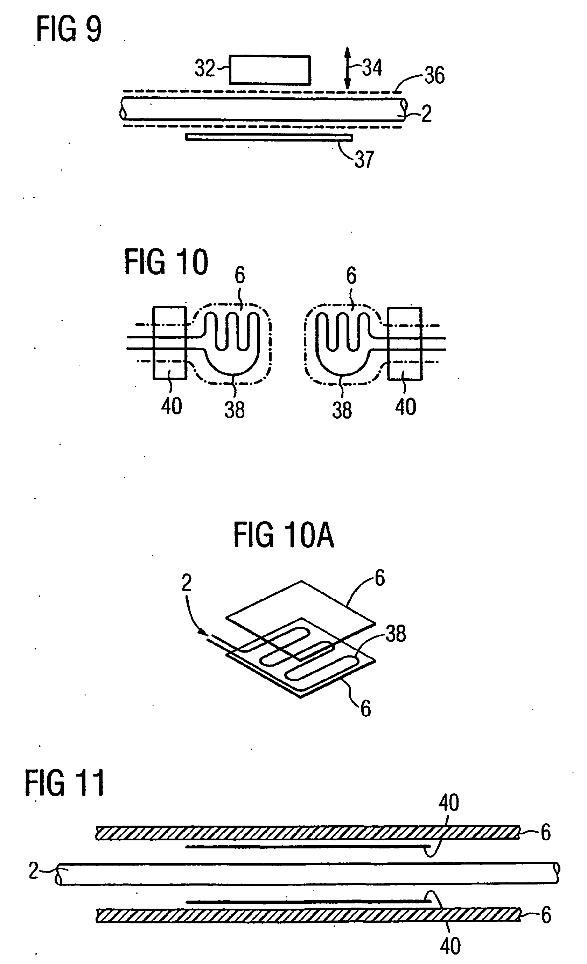

Nach Fig. 9 ist ein Druckelement 32 vorgesehen. Dieses lässt sich in Richtung des Doppelpfeils 34 betätigen und ist im Ausführungsbeispiel als das Führungselement ausgebildet, das in den hier gestrichelt angedeuteten Außenraum 36 bei Betätigung des Druckelements 32 gedrückt wird. In diesem Außenraum 36 ist das Evanescent-Feld ausgebildet, so dass dieses bei Betätigung des Druckelements 32 gestört wird.
Die hierdurch bedingte Dämpfung der Lichtausbreitung in der Faser 2 wird als "Schalten" erfasst und eine dem Schalten zugeordnete Funktion wird veranlasst. Bei der Ausgestaltung als Schaltelement braucht der Lichtwellenleiter lediglich im Bereich des Druckelements 32 als Drucksensor ausgebildet sein. Im übrigen Bereich kann die Faser 2 wie bei einem herkömmlichen Lichtwellenleiter von einem Mantel, dem sogenannten "cladding", umschlossen sein.

Zur optischen Kontrolle, ob der Drucksensor angesprochen hat, ist das Druckelement 32 als ein zumindest teilweise transparentes oder halbtransparentes Element ausgebildet, das bei Betätigung die Totalreflexion unterbricht, so dass ein Teil des sich in der Faser 2 ausbreitenden Lichts ausgekoppelt und über das Druckelement 32 weitergeleitet und sichtbar gemacht wird. Das Druckelement 32 leuchtet daher bei Betätigung. Zur Erhöhung dieser Lichtintensität ist dem Druckelement 32 gegenüber eine reflektierende Fläche 37 angeordnet, so dass nach unten aus der Faser 2 ausgekoppeltes Licht in das Druckelement 32 reflektiert wird.

Nach Fig. 10 umfasst der Drucksensor zwei Faserschleifen 38, so dass insgesamt ein flächiges Sensorelement gebildet ist, das zwei unabhängig voneinander drucksensitive Flächen aufweist. Mit einer derartigen Anordnung lässt sich beispielsweise nicht nur erkennen, ob eine Sitzbelegung vorliegt, sondern auch an welcher Stelle des Sitzes die jeweilige Person sitzt. Nach Fig. 10A liegt die Faserschleife 38 zwischen zwei flächigen Faserführungen 6, insbesondere Kunststofffolien, ein.

Die Faserschleifen 38 sind im Ausführungsbeispiel im Bereich ihrer Zu- und Ableitungen jeweils von einer beidseitig der Faser angeordneten reflektierenden Metallfolie als Deaktivierungselement 40 überdeckt. Das flächige Deaktivierungselement 40 ist zwischen der jeweiligen Faserschleife 38 und dem hier ebenfalls flächigen Führungselement 6 angeordnet (zum Aufbau vgl. Fig. 11).

Der in Fig. 11 dargestellte Aufbau des Drucksensors ist herstellungstechnisch besonders einfach zu verwirklichen. Bei diesem Aufbau ist als Faserführung 6 eine flächige Schaumstoffmatte - oder platte vorgesehen, also ein flächiges Element mit guter elastischer Verformbarkeit, das großflächig die Faser 2 oder auch mehrere Fasern 2 oder mehrere Faserschleifen 38 überdeckt. In Bereichen, in denen keine sensitive Funktion gewünscht ist, ist das Deaktivierungselement 40 ebenfalls als flächiges Element zwischen der Faserführung 6 und der Faser 2 angeordnet. Bei einer Druckbeanspruchung schmiegt sich die Faserführung aufgrund ihrer guten elastischen Eigenschaften im Bereich außerhalb des Deaktivierungselements 40 an die Faser 2 an und stört das Evanescent-Feld. Im Bereich des Deaktivierungselements 40 wird dieses gegen die Faser gepresst und es findet keine Störung des Evanescent-Feldes statt.

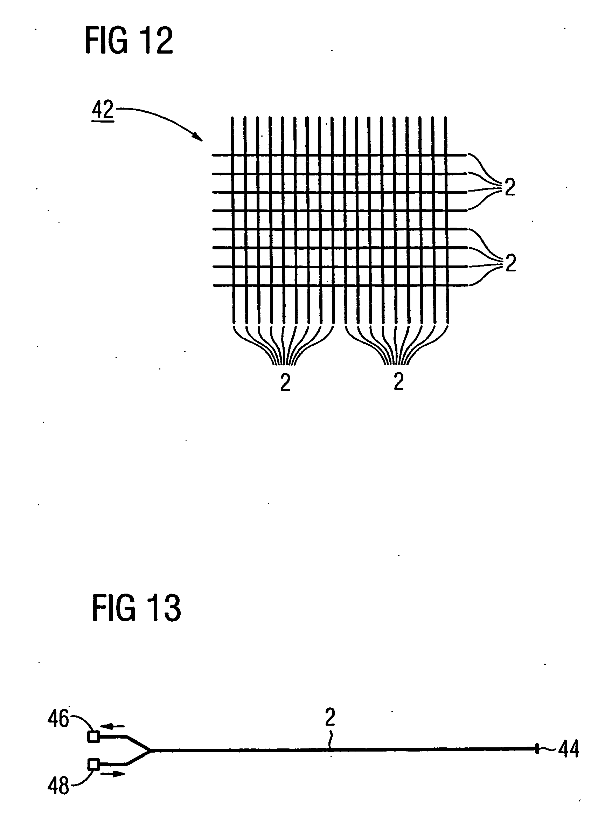

Nach Fig. 12 ist für eine möglichst punktgenaue Erfassung der Druckeinwirkung ein Fasergitter 42 mit sich kreuzenden Fasern 2 vorgesehen, die unabhängig voneinander ausgewertet werden. Als Führungselement (hier nicht dargestellt) ist insbesondere ein großflächiges Element, insbesondere Schaumstoffmatte, geeignet.

Bevorzugt wird in Verbindung mit dem Fasergitter 42 ein virtuelles Druckbild erzeugt, d.h. die Druckverteilung auf einer Fläche wird erfasst, digital verarbeitet und beispielsweise auf einem Monitor dargestellt oder ausgedruckt. Die ortsgenaue Auflösung mit Hilfe des Fasergitters 42 kann insbesondere im Bereich der Automatisierungstechnik eingesetzt werden, um beispielsweise in einem automatisierten Produktionsprozess die exakte Position von einem zu verarbeitenden Element auf einem mit dem Fasergitter 42 versehenen Förderband zu bestimmen. Diese bekannte Position kann dann zur genauen Steuerung eines Roboterarms dienen, mit dem das Element gegriffen werden soll.

Bei allen Ausführungsbeispielen ist eine Lichtquelle, beispielsweise eine Leuchtdiode, vorgesehen, über die Licht in die optische Faser 2 eingekoppelt wird. Weiterhin ist jeweils ein Sensor zur Detektion der durch die Faser 2 übertragenen Lichtintensität vorgesehen. Lichtquelle und Sensor können an den jeweiligen Enden der Faser 2 angeordnet sein. Alternativ hierzu kann an einem Ende der Faser 2 auch ein Reflektor 44 angeordnet sein, der das Licht in die Faser zurückreflektiert, so dass Sensor 46 und Lichtquelle 48 am gleichen Faserende angeordnet sein können. Dadurch wird die Sensitivität erhöht (Fig. 13). Zur Auswertung des Sensorsignals ist weiterhin eine Auswerteeinheit vorgesehen. Im Falle der Verwendung von mehreren Fasern 2 (Fig. 10 u. 12) erfolgt die Auswertung für jede Faser 2 getrennt.

### Bezugszeichenliste

- 2: Optische Faser
- 4: plattenförmiges Element
- 6: Faserführung
- 8: Lichtwellenleiter
- 10: Zwischenraum
- 12A,B,C: Mantel
- 14: Abstandshalter
- 16: Anschlussbereich
- 18: optisches Element
- 20: Zwischenelement
- 22: Kraftfahrzeugtür
- 24: Fensterscheibe
- 26: Dichtungselement
- 28: Türrahmen
- 30: Steuereinheit
- 32: Druckelement
- 34: Doppelpfeil
- 36: Außenraum
- 37: reflektierte Fläche
- 38: Faserschleife
- 40: Deaktivierungselement
- 42: Fasergitter
- 44: Reflektor
- 46: Sensor
- 48: Lichtquelle

## Patentansprüche

1. Drucksensor mit einem Lichtwellenleiter (8), der eine optische Faser (2) mit einem Brechungsindex n1 aufweist,
**dadurch gekennzeichnet,**
**dass** die Faser (2) in einem durch Extrusion hergestellten schlauchartigen Mantel (6, 12A-C) claddingfrei einliegt, wobei im unbelasteten Zustand die Faser (2) allseitig von einem Zwischenraum (10) umgeben ist, in dem sich ein die optische Faser (2) umgebendes Medium mit einem Brechungsindex n2 <n1 befindet, und der Mantel (6, 12A-C) sich lediglich an lokal begrenzten Stützstellen an der Faser (2) abstüzt, wobei der Mantel (6, 12A-C) elastisch ausgebildet ist, so dass er bei einer Druckbeaufschlagung zum Anliegen an die optische Faser (2) kommt, und die Lichtausbreitung durch die optischen Faser (2) bereits ohne Verformung der optischen Faser (2) gedämpft ist.

2. Drucksensor nach Anspruch 1,
**dadurch gekennzeichnet,**
**dass** der Mantel (6, 12A-C) einen Brechungsindex n3 aufweist und die Beziehung n3>n1>n2 gilt.

3. Drucksensor nach Anspruch 1 oder 2,
**dadurch gekennzeichnet,**
**dass** das Medium Gas, insbesondere Luft ist.

4. Drucksensor nach einem der vorhergehenden Ansprüche,
**dadurch gekennzeichnet,**
**dass** die Faser (2) vom Mantel (6, 12A-C) im unbelasteten Fall ohne Druckeinwirkung um etwa 5-20 µm beabstandet ist.

5. Drucksensor nach einem der vorhergehenden Ansprüche,
**dadurch gekennzeichnet,**
**dass** die Drucksensitivität weitgehend über die gesamte Länge der Faser (2) gegeben ist.

6. Drucksensor nach einem der vorhergehenden Ansprüche,
**dadurch gekennzeichnet,**
**dass** der Mantel (6,12B) eine rechteckförmige Querschnittsfläche aufweist.

7. Drucksensor nach einem der Ansprüche 1 bis 5,
**dadurch gekennzeichnet,**
**dass** der Mantel (6,12A) die Faser (2) konzentrisch umgibt und Abstandshalter (14) zur Faser (2) aufweist.

8. Drucksensor nach einem der Ansprüche '1 bis 5,
**dadurch gekennzeichnet,**
**dass** der Mantel (6,12C) eine Oberflächenrauhigkeit aufweist und im unbelasteten Fall ohne Druckeinwirkung die Ausbildung des Zwischenraums (10) durch die Oberflächenrauhigkeit gewährleistet ist.

9. Drucksensor nach einem der vorhergehenden Ansprüche,
**dadurch gekennzeichnet,**
**dass** der Mantel (6,12A-C) als ein Dichtungselement (26) ausgebildet ist.

10. Drucksensor nach einem der vorhergehenden Ansprüche,
**dadurch gekennzeichnet,**
**dass** der Lichtwellenleiter (8) endseitig in einem Anschlussbereich (16) zwischen der Faser (2) und dem Mantel (6) ein Zwischenelement (20) aufweist, welches derart ausgebildet ist, dass bei einer Druckbeaufschlagung die Lichtausbreitung in der optischen Faser (2) im Anschlussbereich (16) keine Dämpfung erfährt.

11. Drucksensor nach Anspruch 10,
**dadurch gekennzeichnet,**
**dass** das Zwischenelement (20) eine reflektierende Schicht aufweist und insbesondere einen Brechungsindex n4<n1 hat.

12. Drucksensor nach einem der vorhergehenden Ansprüche,
**dadurch gekennzeichnet,**
**dass** mehrere getrennte optische Fasern (2) zur ortsaufgelösten Erfassung von Druckbeaufschlagungen vorgesehen sind.

13. Drucksensor nach Anspruch 12,
**dadurch gekennzeichnet,**
**dass** die Fasern (2) sich kreuzen und nach Art eines Gitters angeordnet sind.

14. Drucksensor nach einem der vorhergehenden Ansprüche,
**dadurch gekennzeichnet,**
**dass** zur Unterbindung der Sensitivität in einem Teilbereich der Faser (2) ein Deaktivierungselement (40), insbesondere eine reflektierende Folie, vorgesehen ist, welches bei einer Druckbeaufschlagung eine Dämpfung der Lichtausbreitung in dem Teilbereich verhindert.

15. Drucksensor nach einem der vorhergehenden Ansprüche,
**dadurch gekennzeichnet,**
**dass** er als Schaltelement ausgebildet ist und hierzu ein Druckelement (32) vorgesehen ist.

16. Drucksensor nach Anspruch 15,
**dadurch gekennzeichnet,**
**dass** das Druckelement (32) derart ausgebildet ist, dass bei seiner Betätigung ein Teil des sich in der Faser (2) ausbreitenden Lichts ausgekoppelt und sichtbar gemacht wird.

17. Kraftfahrzeug mit einem Drucksensor nach einem der vorhergehenden Ansprüche.

18. Kraftfahrzeug nach Anspruch 17, bei dem der Drucksensor in einem Dichtungselement (26) integriert und Teil einer Einklemmschutzvorrichtung ist.

19. Verfahren zur Druckerfassung mit einem Lichtwellenleiter (8), der eine optische Faser (2) mit einem Brechungsindex n1 aufweist,
**dadurch gekennzeichnet,**
**dass** die Faser (2) in einem durch Extrusion hergestellten schlauchartigen Mantel (6, 12A-C) claddingfrei einliegt, wobei im unbelasteten Zustand die Faser (2) allseitig von einem Zwischenraum (10) umgeben wird, in dem sich ein die optische Faser (2) umgebendes Medium mit einem Brechungsindex n2 <n1 befindet, und der Mantel (6,12A-C) sich lediglich an lokal begrenzten Stützstellen an der Faser (2) abstüzt, wobei in die Faser (2) Licht eingekoppelt wird, so dass sich im direkt an die Faser (2) angrenzenden Außenbereich innerhalb des Zwischenraums ein Evanescent-Feld ausbildet, und wobei bei einer Druckbeaufschlagung der Mantel (6, 12A-C) in den Außenbereich mit dem Evanescent-Feld gelangt, so dass das Evanescent-Feld und damit die Lichtausbreitung in der Faser (2) bereits ohne Deformation der Faser (2) geschwächt wird und diese Schwächung erfasst wird.

## Claims

1. Pressure sensor having an optical waveguide (8) which has an optical fibre (2) with a refractive index n1,
**characterized**
**in that** the fibre (2) enters a casing (6, 12A-C), which is like a flexible tube and is produced by extrusion, without any cladding, with the fibre (2) being surrounded on all sides by an intermediate space (10) in the unloaded state, in which intermediate space (10) a medium which surrounds the optical fibre (2) and has a refractive index of n2<n1 is located, and the casing (6, 12A-C) is supported on the fibre (2) only at locally limited support points, with the casing (6, 12A-C) being elastic such that it comes to rest on the optical fibre (2) when pressure is applied, and the light propagation through the optical fibre (2) is attenuated even without deformation of the optical fibre (2).

2. Pressure sensor according to Claim 1,
**characterized**
**in that** the casing (6, 12A-C) has a refractive index of n3, where n3>n1>n2.

3. Pressure sensor according to Claim 1 or 2,
**characterized**
**in that** the medium is gas, in particular air.

4. Pressure sensor according to one of the preceding claims,
**characterized**
**in that** the fibre (2) is at a distance of about 5-20 µm from the casing (6, 12A-C) in the unloaded state when no pressure is applied.

5. Pressure sensor according to one of the preceding claims,
**characterized**
**in that** the pressure sensitivity is largely provided over the entire length of the fibre (2).

6. Pressure sensor according to one of the preceding claims,
**characterized**
**in that** the casing (6, 12B) has a rectangular cross-sectional area.

7. Pressure sensor according to one of Claims 1 to 5,
**characterized**
**in that** the casing (6, 12A) concentrically surrounds the fibre (2) and has a spacer (14) with respect to the fibre (2).

8. Pressure sensor according to one of Claims 1 to 5,
**characterized**
**in that** the casing (6, 12C) has a surface roughness, and the formation of the intermediate space (10) is ensured by the surface roughness in the unloaded state, when no pressure is applied.

9. Pressure sensor according to one of the preceding claims,
**characterized**
**in that** the casing (6, 12A-C) is formed by a sealing element (26).

10. Pressure sensor according to one of the preceding claims,
**characterized**
**in that** the optical waveguide (8) has an intermediate element (20) at the end in a connecting area (16) between the fibre (2) and the casing (6), which intermediate element (20) is designed such that, when pressure is applied, the light propagation in the optical fibre (2) is not attenuated in the connecting area (16).

11. Pressure sensor according to Claim 10,
**characterized**
**in that** the intermediate element (20) has a reflective layer and, in particular, has a refractive index of n4<nl.

12. Pressure sensor according to one of the preceding claims,
**characterized**
**in that** two or more separate optical fibres (2) are provided for position-resolved detection of pressure that is applied.

13. Pressure sensor according to Claim 12,
**characterized**
**in that** the fibres (2) cross one another, and are arranged in the form of a grating.

14. Pressure sensor according to one of the preceding claims,
**characterized**
**in that**, in order to suppress the sensitivity in one subarea of the fibre (2), a deactivation element (40), in particular a reflective sheet, is provided, which prevents attenuation of the light propagation in the subarea when pressure is applied.

15. Pressure sensor according to one of the preceding claims,
**characterized**
**in that** the pressure sensor is in the form of a switching element, and a pressure element (32) is provided for this purpose.

16. Pressure sensor according to Claim 15,
**characterized**
**in that** the pressure element (32) is designed such that, when it is operated, a portion of the light propagating in the fibre (2) is emitted, and is made visible.

17. Motor vehicle having a pressure sensor according to one of the preceding claims.

18. Motor vehicle according to Claim 17, in which the pressure sensor is integrated in a sealing element (26), and is part of a trapping protection apparatus.

19. Method for pressure detection having an optical waveguide (8) which has an optical fibre (2) with a refractive index of n1,
**characterized**
**in that** the fibre (2) enters a casing (6, 12A-C), which is like a flexible tube and is produced by extrusion, without any cladding, with the fibre (2) being surrounded on all sides by an intermediate space (10) in the unloaded state, in which intermediate space (10) a medium which surrounds the optical fibre (2) and has a refractive index of n2<n1 is located, and the casing (6, 12A-C) is supported on the fibre (2) only at locally limited support points, with light being injected into the fibre (2) so that an evanescent field is formed within the intermediate space in the outer area which is directly adjacent to the fibre (2), and with a casing (6, 12A-C) entering the outer area of the evanescent field when pressure is applied, so that the evanescent field and hence the light propagation in the fibre (2) is attenuated even without any deformation of the fibre (2), and this attenuation is detected.

## Revendications

1. Capteur de pression muni d'un guide d'ondes optiques (8), qui présente une fibre optique (2) avec un indice de réfraction n1,
**caractérisé en ce que**
la fibre (2) se trouve sans revêtement dans une gaine (6, 12A-C) sous forme de tuyau flexible fabriqué par extrusion, où dans un état non chargé, la fibre (2) est entourée de tous côtés par un intervalle (10), dans lequel se trouve un médium avec un indice de réfraction n2 < n1 entourant la fibre optique (2), et la gaine (6, 12A-C) s'appuie sur la fibre (2) uniquement en des points d'appui localement limités, où la gaine (6, 12A-C) est réalisée élastiquement, de sorte qu'elle vient en contact de la fibre optique (2) lors d'une alimentation en pression, et la propagation de lumière par la fibre optique (2) est atténuée sans déformation de la fibre optique (2).

2. Capteur de pression selon la revendication 1, **caractérisé en ce que** la gaine (6, 12A-C) présente un indice de réfraction n3 et la relation n3 > n1 > n2 s'applique.

3. Capteur de pression selon la revendication 1 ou 2, **caractérisé en ce que** le médium est un gaz, en particulier de l'air.

4. Capteur de pression selon l'une des revendications précédentes, **caractérisé en ce que** la fibre (2) se trouve à une distance d'environ 5-20 gm de la gaine (6, 12A-C) dans un cas non chargé sans effet de pression.

5. Capteur de pression selon l'une des revendications précédentes, **caractérisé en ce que** la sensibilité de pression est transmise sensiblement sur toute la longueur de la fibre (2).

6. Capteur de pression selon l'une de revendications précédentes, **caractérisé en ce que** la gaine (6, 12B) présente une surface en coupe rectangulaire.

7. Capteur de pression selon l'une des revendications 1 à 5, **caractérisé en ce que** la gaine (6, 12A) entoure la fibre (2) concentriquement et présente des éléments d'écartement (14) par rapport à la fibre (2).

8. Capteur de pression selon l'une des revendications 1 à 5, **caractérisé en ce que** la gaine (6, 12C) présente une rugosité superficielle et, dans le cas non chargé sans effet de pression, la réalisation de l'intervalle (10) est garantie par la rugosité de surface.

9. Capteur de pression selon l'une des revendications précédentes, **caractérisé en ce que** la gaine (6, 12A-C) est réalisé sous la forme d'un élément d'étanchéité (26).

10. Capteur de pression selon l'une des revendications précédentes, **caractérisé en ce que** le guide d'ondes optiques (8) présente à une extrémité dans une zone de connexion (16) entre la fibre (2) et la gaine (6) un élément intermédiaire (20), qui est réalisé de sorte que, lors d'une alimentation en pression, la propagation de la lumière dans la fibre optique (2) ne connaît aucune atténuation dans la zone de connexion (16).

11. Capteur de pression selon la revendication 10, **caractérisé en ce que** l'élément intermédiaire (20) présente une couche réfléchissante et présente en particulier un indice de réfraction n4 < n1.

12. Capteur de pression selon l'une des revendications précédentes, **caractérisé en ce que** plusieurs fibres optiques distinctes (2) sont prévues pour la détection locale d'alimentations en pression.

13. Capteur de pression selon la revendication 12, **caractérisé en ce que** les fibres (2) se croisent et sont disposées en forme de réseau.

14. Capteur de pression selon l'une des revendications précédentes, **caractérisé en ce que**, pour empêcher la sensibilité dans une zone partielle de la fibre (2), un élément de désactivation (40), en particulier une feuille réfléchissante, est prévue, qui, lors d'une alimentation en pression, empêche une atténuation de la propagation de la lumière dans la zone partielle.

15. Capteur de pression selon l'une des revendications précédentes, **caractérisé en ce qu'**il est réalisé comme élément de commutation et ainsi un élément de pression (32) est prévu.

16. Capteur de pression selon la revendication 15, **caractérisé en ce que** l'élément de pression (32) est réalisé de sorte que, lors de son actionnement, une partie de la lumière se propageant dans la fibre (2) est découplée et rendue visible.

17. Véhicule équipé d'un capteur de pression selon l'une des revendications précédentes.

18. Véhicule selon la revendication 17, dans lequel le capteur de pression est intégré dans un élément d'étanchéité (26) et est une partie d'un dispositif de protection contre le coincement.

19. Procédé pour la détection de pression par un guide d'ondes optiques (8), qui présente une fibre optique (2) avec un indice de réfraction n1,
**caractérisé en ce que**
la fibre (2) se trouve sans revêtement dans une gaine (6, 12A-C) sous forme de tuyau flexible fabriqué par extrusion, où, dans l'état non chargé, la fibre (2) est entourée de tous côtés par un intervalle (10), dans lequel se trouve un médium avec un indice de réfraction n2 < n1 entourant la fibre optique (2), et la gaine (6, 12A-C) s'appuie sur la fibre (2) seulement en des points d'appui localement limités, où la lumière est couplée dans la fibre (2), de sorte qu'un champ évanescent est réalisé dans la zone extérieure directement adjacente à la fibre (2) à l'intérieur de l'intervalle, et où, lors d'une alimentation en pression, la gaine (6, 12A-C) atteint la zone extérieure avec le champ évanescent, de sorte que le champ évanescent et ainsi la propagation de la lumière dans la fibre (2) est atténué sans déformation de la fibre (2) et cette atténuation est détectée.
